# EUROPÄISCHE PATENTSCHRIFT

(11) **EP 0 902 579 B1**
(45) Veröffentlichungstag und Bekanntmachung des Hinweises auf die Patenterteilung: **03.11.2004**
(21) Anmeldenummer: 98115312.5
(22) Anmeldetag: 14.08.1998
(51) Int. Cl.: H04M 3/00, H04M 3/42

(54) **Verfahren zur Herstellung eines Haltezustands ("Parken") einer Verbindung zwischen zwei Wählanschlüssen**
Method for establishing a hold state of a connection between two terminals
Méthode pour établir un état d'attente d'une connexion entre deux terminaux

(30) Priorität: 13.09.1997 DE 19740302
(43) Veröffentlichungstag der Anmeldung: 17.03.1999
(73) Patentinhaber: Deutsche Telekom AG, 53113 Bonn (DE)
(72) Erfinder: Schellhaas, Werner, 64372 Ober-Ramstadt (DE)

(56) Entgegenhaltungen:
- EP-A- 0 434 239
- US-A- 3 870 831
- US-A- 5 539 814
- BOOM W ET AL: "NEW GROUP FEATURE COLLECTION FOR SOPHO-S ISPBXS" PHILIPS TELECOMMUNICATION REVIEW,NL,PHILIPS TELECOMMUNICATIE INDUSTRIE N.V. HILVERSUM, Bd. 51, Nr. 3, Seite 10-16 XP000457193

## Beschreibung

Die Erfindung betrifft ein Verfahren zur Herstellung eines Haltezustands ("Parken") einer Verbindung zwischen zwei Wählanschlüssen gemäß dem Oberbegriff von Anspruch 1.

Das Leistungsmerkmal "Parken" ist heute bereits am digitalen ISDN-Anschluß und in TK-Anlagen realisiert. Es ermöglicht dem Benutzer, eine bestehende, gehende oder kommende Kommunikationsverbindung in einen Haltezustand ("Parken") zu bringen, wobei der Gespächspartner eine Ansage oder Musikeinspielung (music on hold) erhält. Im Haltezustand können beliebige Manipulationen an den Endgeräten des initiierenden Anschlusses vorgenommen werden, welche im Normalzustand der Verbindung zum Abbau der Verbindung führen, z.B. Auflegen des Telefonhörers und Herausziehen des Endgeräts aus der Anschlußdose. Der Benutzer am initiierenden Anschluß kann beispielsweise seinen Hörer auflegen, um an ein anderes Endgerät zu gehen, oder sein Endgerät von der Anschlußdose zu trennen und an einer anderen Stelle wieder an einer Kommunikationsdose anschließen. Durch erneutes Belegen des Anschlusses, z.B. durch Abnehmen des Hörers, und gegebenenfalls Eingabe einer Prozedur wird die gehaltene Verbindung wieder zurückgeparkt und der Haltezustand beendet.

Ein Benutzer am analogen Wählanschluß muß derzeit eine kostenintensive und aufwendige Lösung über den Umschalter AWADo/T2/T4 realisieren, um eine Verbindung von einem Endgerät zu einem anderen Endgerät umzulegen. Hinzu kommt, daß über diese automatischen Umschalter eine Verbindung nur umgelegt werden kann, wenn durch Zuruf eine andere Person an dem gewünschten Endgerät eine Belegung vorbereitet, z.B. durch Abnehmen des Hörers. Erst danach wird durch Auflegen an dem ursprünglichen Endgerät die Verbindung zu dem anderen durchgeschaltet. Steht keine zweite Person zur Verfügung, muß der Benutzer diesen Vorgang relativ umständlich selbst nach und nach durchführen. Hinzu kommt, daß diese automatischen Umschalter durch ihr Schaltverhalten und den unterschiedlichen Anschlußleitungsverhältnissen immer wieder Probleme bereiten. Das Umstecken eines Endgerätes von einer Anschlußdose an eine andere Anschlußdose ist grundsätzlich nicht möglich, da der Verbindungsabbau unverzüglich nach Abziehen des Endgerätes an der TAE-Dose ausgelöst wird.

Der Erfindung liegt daher die Aufgabe zugrunde, ein Verfahren anzugeben, das bei analogen Wählanschlüssen die einfache Herstellung eines vorübergehenden Haltezustands ("Parken") einer Kommunikationsverbindung ermöglicht, in welchem Manipulationen am Endgerät, insbesondere das Auflegen des Hörers und das Abziehen des Endgerätes an der Anschlußdose, nicht den Abbau der Verbindung bewirken, so daß die Kommunikation mit dem Gesprächspartner über ein anderes Endgerät oder an einem anderen Ort fortgesetzt werden kann.

Die Aufgabe wird gelöst durch ein Verfahren zur Herstellung eines Haltezustands ("Parken") einer Verbindung gemäß dem Oberbegriff von Anspruch 1, welches dadurch gekennzeichnet ist, daß der initiierende Anschluß ein analoger Anschluß ist und das Verfahren wenigstens folgende, automatisch nacheinander ablaufende Schritte enthält:
a) das Verfahren wird durch ein Steuersignal, das durch eine Aktivierungsprozedur, z.B. durch Tastatureingabe, an einem Endgerät des initiierenden Anschlusses erzeugt und vom Netzknoten erkannt wird, gestartet;
b) innerhalb eines vorbestimmten Zeitintervalls Δt erhält der Netzknoten die Verbindung vom initiierenden Anschluß zum wartenden Anschluß, aufrecht und ignoriert dabei Signale, die den Verbindungsabbau im Normalzustand auslösen und durch Deaktivierung des am initiierenden Anschluß verwendeten Endgerät bewirkt werden;
c) der Netzknoten eine Neubelegung am initiierenden Anschluß erkennt und
c1) bei innerhalb des Zeitintervalls Δt vorgenommener Neubelegung die gehaltene Verbindung vom wartenden zum initiierenden Anschluß durchschaltet
   oder
c2) die Verbindung vom wartenden zum initiierenden Anschluß abbaut, falls innerhalb des Zeitintervalls Δt keine Neubelegung erkannt wird.

In einer vorteilhaften Weiterbildung des Verfahrens erfolgt im Schritt c) ein Wiederanruf des initiierenden Anschlusses durch den Netzknoten, wenn innerhalb des Zeitintervalls Δt keine Neubelegung am initiierenden Anschluß erkannt wurde. Die Verbindung wird bei daraufhin erfolgender Neubelegung des initiierenden Anschlusses innerhalb eines Zeitintervalls Δt' vom wartenden zum initiierenden Anschluß durchgeschaltet. Andernfalls wird sie abgebaut, falls keine Reaktion seitens des initiierenden Anschlusses erfolgt.

Durch das Verfahren ist in einem Telefonnetz mit teilweise analogen Wählanschlüssen vorteilhaft eine Prozedur festgelegt, die eine bestehende gehende oder kommende Verbindung in einen Haltezustand ("Parken") - ähnlich wie bei Rückfrage, Makeln - bringt und anschließend für einen bestimmten Zeitraum ein vorübergehendes Deaktivieren von Endgeräten am initiierenden Anschluß erlaubt, bis nach einer erneuten Belegung und gegebenenfalls Eingabe einer Prozedur ("Zurückparken") die gehaltene Verbindung wieder zum initiierenden Anschluß durchgeschaltet ist. Wird die geparkte Verbindung nicht innerhalb einer bestimmten Dauer übernommen, erfolgt ein Wiederanruf, bis schließlich nach einem weiteren Zeitraum die geparkte Verbindung zwangsabgebaut und Gassenbesetzton angelegt wird.

Die Einleitung dieses Verfahrens zur Herstellung des Halteszustands einer Verbindung ("Parken") kann beispielsweise durch Auslösen eines Hook-Flash-Signals mit anschließender Eingabe eines oder mehrerer Steuerkennzeichen erfolgen (z.B. Hook-Flash, "9"). Dadurch erhält der nun im Parkzustand befindliche Teilnehmer vorzugsweise eine informierende Ansage 9, z.B. "Ihre Verbindung wird gehalten". Der Netzknoten oder die Vermittlungsstelle baut beim Erkennen eines Auslösevorgangs am initiierenden Wählanschluß die geparkte Verbindung dann nicht ab. Erkennt der Netzknoten am initiierenden Wählanschluß innerhalb von beispielsweise Δt=30 s eine erneute Belegung, schaltet er unmittelbar oder durch Eingabe einer besonderen Deaktivierungsprozedur (z.B. "*9#") die geparkte Verbindung wieder durch. Damit ist die ursprüngliche Verbindung wieder hergestellt.

Erkennt der Netzknoten innerhalb dieses Zeitintervalls Δt, beispielsweise Δt=30 s, keine erneute Belegung, so wird die Verbindung zwangsabgebaut. Vorteilhaft ist jedoch die Zwischenschaltung eines Wiederanrufs an den initiierenden Anschluß durch den Netzknoten. Wird dieser Wiederanruf beim initiierenden Anschluß nicht innerhalb eines weiteren Zeitintervalls Δt' von beispielsweise ebenfalls Δt'=30 s angenommen, löst der Netzknoten die geparkte Verbindung rückwärts aus und legt dem wartenden Anschluß Gassenbesetzton an.

Durch das Verfahren ist es in vorteilhafter Weise möglich, während einer bestehenden Verbindung ein anderes Endgerät zu nutzen oder in einen anderen Raum zu gehen. Dadurch wird das Umschalten auf ein Faxgerät ohne den Verlust der bereits hergestellten Verbindung oder das Benutzen eines anderen Endgeräts, z.B. mit besonderen Leistungsmerkmalen wie Lauthören, Freisprechen etc., möglich. Durch Eingabe einer Aktivierungsprozedur, z.B. der Tastenkombination Hook-Flash (HF) und einer entsprechenden Steuerkennziffer, kann der Teilnehmer am initiierenden Anschluß diese Verbindung "parken" und anschließend das gerade benutzte Endgerät deaktivieren. Ein Auflegen des Hörers oder Ziehen des TAE-Anschlußsteckers führt dann beispielsweise nicht zum Abbau der Verbindung. Hat der Kunde sein Endgerät wieder an eine TAE-Dose, z.B. in einem anderen Raum, angesteckt und belegt den Anschluß erneut oder belegt er seinen Anschluß erneut von einem anderen Endgerät aus, so übernimmt er die geparkte Verbindung wieder. Die Herstellung des Normalzustands kann entweder durch einfaches Belegen, z.B. durch Abnehmen des Hörers, oder zusätzlich durch Eingabe einer Deaktivierungsprozedur (z.B. *9#) ausgelöst werden. Danach besteht die Verbindung mit dem geparkten Teilnehmer erneut. Dieser Vorgang kann beliebig oft während einer bestehenden Verbindung ausgeführt werden, wobei die Rollen des initiierenden und des wartenden Anschlusses beliebig vertauschbar sind.

Die Tarifierung bei einer gehenden Verbindung erfolgt vorzugsweise auch während des geparkten Zeitraums; die korrekte Entgeltzählung im Endgerät ist in diesem Falle jedoch nicht gegeben.

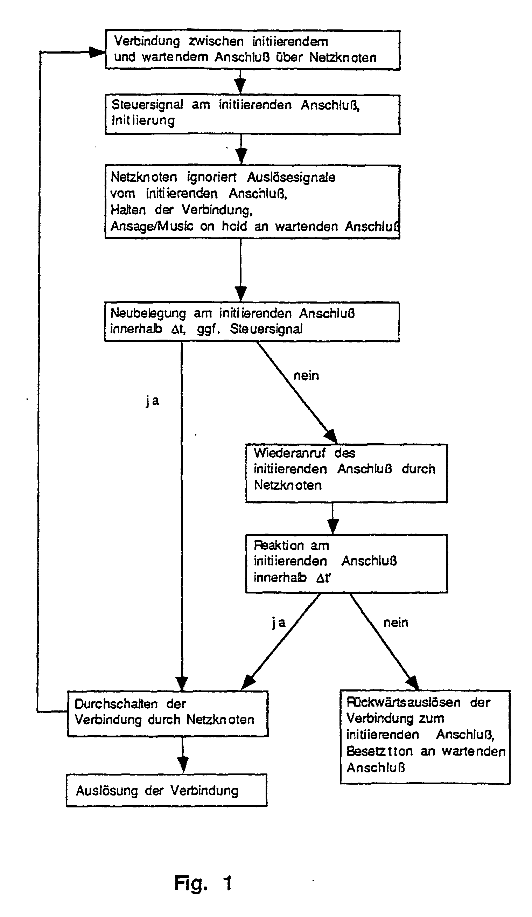

### Beschreibung der Zeichnung:

Die Zeichnung zeigt ein Flußdiagramm des erfindungsgemäßen Verfahrens zur Herstellung des Haltezustands einer Verbindung ("Parken"). Ausgangssituation ist eine bestehende Kommunikationsverbindung zwischen zwei Wählanschlüssen, von denen einer als initiierender Anschluß, an welchem das Parken der Verbindung ausgelöst wird, sowie der zweite Anschluß als wartender Anschluß bezeichnet ist. Die Telefonverbindung wird über einen Netzknoten des Telefonnetzes in gewohnter Weise hergestellt. Der initiierende Anschluß ist ein analoger Wählanschluß.

Das Parken der Verbindung zwischen initiierendem und wartendem Anschluß wird durch ein Steuersignal eingeleitet. Das Steuersignal wird durch eine Aktivierungsprozedur, z.B. durch Tastatureingabe an einem Endgerät des initiierenden Anschlusses, erzeugt und vom Netzknoten erkannt. Diese Tastenkombination ist beispielsweise die Eingabe von Hook-Flash (HF) und einer Steuerkennziffer, z.B. "9".

Nach Einleitung des Verfahrens durch den initiierenden Anschluß ignoriert der Netzknoten innerhalb eines vorbestimmten Zeitintervalls Δt Signale, welche den Verbindungsabbau normalerweise auslösen, seitens des initiierenden Anschlusses. Diese Auslösesignale werden vom initiierenden Anschluß üblicherweise dann erzeugt, wenn der Hörer aufgelegt oder das Endgerät aus der Anschlußbuchse gezogen wird. Im Normalzustand wird die Verbindung bei Eingang derartiger Auslösesignale nach Definition abgebaut. Im Haltezustand wird die Verbindung auch bei vom Netzknoten erkannter Deaktivierung des benutzten Endgeräts am initiierenden Anschluß aufrechterhalten.

Wurde das Parken der Verbindung vom initiierenden Anschluß eingeleitet, wird dem Gesprächspartner am wartenden Anschluß ein Ansagetext oder Musik durch den Netzknoten eingespielt.

Der Netzknoten erkennt eine Neubelegung am initiierenden Anschluß, z.B. durch Wiederaufnahme des Hörers oder Anschluß und Aktivierung eines weiteren Endgeräts. Gegebenenfalls muß die Neubelegung durch eine Deaktivierungsprozedur beispielsweise eine Tastenkombination HF und Steuerkennzeichen quittiert werden.

Erfolgt innerhalb des Zeitintervalls Δt eine Neubelegung am initiierenden Anschluß, so schaltet der Netzknoten die Verbindung vom wartenden zum initiierenden Anschluß wieder frei. Die Kommunikation kann in gewohnter Weise fortgesetzt werden, der Verbindungsabbau wird in gewohnter Weise durch Auflegen des Hörers oder Deaktivieren des Endgeräts ausgelöst und die Verbindung vom Netzknoten abgebaut. Die bestehende Kommunikationsverbindung kann beliebig oft geparkt werden, wobei auch die Rollen von initiierendem und wartendem Anschluß vertauschbar sind.

Erkennt der Netzknoten innerhalb Δt keine Neubelegung am initiierenden Anschluß, so ruft er automatisch beim initiierenden Anschluß an. Auf diese Weise wird der Teilnehmer am initiierenden Anschluß daran erinnert, daß er die Verbindung mit seinem Kommunikationspartner zwischenzeitlich geparkt hatte.

Erfolgt auf den Wiederanruf eine Reaktion am initiierenden Anschluß innerhalb eines Zeitintervalls Δt', so schaltet der Netzknoten die Verbindung zwischen wartendem und initiierendem Anschluß erneut durch, und die Kommunikation kann fortgesetzt werden.

Erkennt der Netzknoten innerhalb des Zeitintervalls Δt' keine Reaktion am initiierenden Anschluß, z.B. durch Aufnahme des Hörers oder Ansprechen des Faxgeräts, so baut er die Verbindung zum initiierenden Anschluß rückwärts ab. An den wartenden Anschluß wird der Gassenbesetztton ausgegeben, welcher dem wartenden Teilnehmer anzeigt, daß die Kommunikationsverbindung zu seinem Gesprächspartner nunmehr abgebrochen ist.

## Patentansprüche

1. Verfahren zur Herstellung eines Haltezustands, "Parken", einer Verbindung zwischen zwei Wählanschlüssen, wobei das Parken der Verbindung von einem der Anschlüsse, dem initiierenden Anschluß, ausgelöst und die Verbindung zum zweiten Anschluß, dem wartenden Anschluß, gehalten wird, wobei den Verbindungsabbau im Normalzustand auslösende, auf der Seite des initiierenden Anschlusses abgegebene Signale im Haltezustand wirkungslos sind, **dadurch gekennzeichnet, daß** der initiierende Anschluß ein analoger Anschluß ist und das Verfahren wenigstens folgende, automatisch nacheinander ablaufende Schritte enthält:
a) das Verfahren wird durch ein Steuersignal, das durch eine Aktivierungsprozedur, z.B. durch Tastatureingabe, an einem Endgerät des initiierenden Anschlusses erzeugt und vom Netzknoten erkannt wird, gestartet;
b) innerhalb eines vorbestimmten Zeitintervalls Δt erhält der Netzknoten die Verbindung vom initiierenden Anschluß zum wartenden Anschluß, aufrecht und ignoriert dabei Signale, die den Verbindungsabbau im Normalzustand auslösen und durch Deaktivierung des am initiierenden Anschluß verwendeten Endgerät bewirkt werden;
c) der Netzknoten eine Neubelegung am initiierenden Anschluß erkennt und
c1) bei innerhalb des Zeitintervalls Δt vorgenommener Neubelegung die gehaltene Verbindung vom wartenden zum initiierenden Anschluß durchschaltet
oder
c2) die Verbindung vom wartenden zum initiierenden Anschluß abbaut, falls innerhalb des Zeitintervalls Δt keine Neubelegung erkannt wird.

2. Verfahren nach Anspruch 1, **dadurch gekennzeichnet,**
**daß** ein Wiederanruf des initiierenden Anschlusses durch den Netzknoten erfolgt, wenn innerhalb des Zeitintervalls Δt keine Neubelegung am initiierenden Anschluß erkannt wurde, die Verbindung bei daraufhin erfolgender Neubelegung des initiierenden Anschlusses innerhalb eines Zeitintervalls Δt' durchgeschaltet oder andernfalls abgebaut wird, falls keine Reaktion seitens des initiierenden Anschlusses erfolgt.

3. Verfahren nach Anspruch 1 oder 2, **dadurch gekennzeichnet,**
**daß** das Parken und Durchschalten der Verbindung beliebig oft hintereinander durchführbar ist.

4. Verfahren nach einem der vorangegangenen Ansprüche, **dadurch gekennzeichnet,**
**daß** das Steuersignal, welches das Parken einleitet, durch Eingabe von Hook-Flash (HF) und eines oder mehrerer Steuerkennzeichen erzeugt wird.

5. Verfahren nach einem der vorangegangenen Ansprüche, **dadurch gekennzeichnet,**
**daß** zum Wiederaufnehmen der Verbindung seitens der initiierenden Anschlusses neben der Neubelegung die Eingabe einer Deaktivierungsprozedur, z.B. die Tastenkombination Hook-Flash (HF) und ein oder mehrere Steuerkennzeichen, notwendig ist.

6. Verfahren nach einem der vorangegangenen Ansprüche, **dadurch gekennzeichnet,**
**daß** der Netzknoten dem wartenden Anschluß während des Parkens einen Ansagetext und/oder Musik einspielt.

## Claims

1. Method for establishing a hold condition, "parking", of a call between two dial-up subscriber stations, the parking of the call being triggered by one of the subscriber stations, the initiating subscriber station, and the call to the second subscriber station, the waiting subscriber station, being held, wherein signals issued on the side of the initiating subscriber station and triggering call cleardown in the normal condition are without effect in the hold condition, **characterized in that** the initiating subscriber station is an analog subscriber station and the method contains at least the following steps which are executed automatically one after the other:
a) the method is started by a control signal, said control signal being generated by an activation procedure, e.g. by keyboard input, on a terminal device of the initiating subscriber station and being detected by the network node;
b) within a predetermined time interval Δt the network node maintains the call from the initiating subscriber station to the waiting subscriber station and ignores signals which trigger call cleardown in the normal condition and which are effected through deactivation of the terminal device used at the initiating subscriber station;
c) the network node detects a reseizure at the initiating subscriber station and
c1) if reseizure takes place within the time interval Δt, the network node connects through the held call from the waiting subscriber station to the initiating subscriber station
or
c2) clears down the call from the waiting subscriber station to the initiating subscriber station if no reseizure is detected within the time interval Δt.

2. Method according to claim 1, **characterized in that**
the initiating subscriber station is recalled by the network node if no reseizure was detected at the initiating subscriber station within the time interval Δt, the call is connected through if the initiating subscriber station is thereupon reseized within a time interval Δt' or is otherwise cleared down if there is no reaction on the part of the initiating subscriber station.

3. Method according to claim 1 or 2, **characterized in that**
the parking and connecting-through of the call can be performed in succession any number of times.

4. Method according to any one of the preceding claims, **characterized in that**
the control signal which initiates parking is generated by the input of hook flash (HF) and one or more control characters.

5. Method according to any one of the preceding claims, **characterized in that**
the resumption of the call on the part of the initiating subscriber station requires, in addition to reseizure, the input of a deactivation procedure, e.g. the key combination hook flash (HF) and one or more control characters.

6. Method according to any one of the preceding claims, **characterized in that**
the network node plays an announcement text and/or music to the waiting subscriber station during parking.

## Revendications

1. Procédé servant à générer une mise en attente d'une liaison entre deux lignes commutées, cette mise en attente étant déclenchée par l'une des lignes, la ligne d'initialisation, et la liaison étant maintenue avec la deuxième ligne, la ligne en attente, les signaux émis du côté de la ligne d'initialisation pour déclencher à l'état normal la rupture de la liaison étant sans effet en état d'attente, **caractérisé en ce que**
la ligne d'initialisation est une ligne analogique et le procédé comprend au moins les phases suivantes se succédant automatiquement :
a) le procédé est initialisé sur un équipement terminal de la ligne d'initialisation par un signal de commande qui est généré par une procédure d'activation, par ex. commande sur clavier, et identifié par le noeud de réseau ;
b) pendant un intervalle de temps prédéterminé Δt, le noeud de réseau maintient la liaison de la ligne d'initialisation vers la ligne en attente et ignore les signaux qui déclenchent en temps normal la rupture de la liaison et sont générés par désactivation de l'équipement terminal utilisé au niveau de la ligne d'initialisation ;
c) le noeud de réseau identifie une nouvelle occupation sur la ligne d'initialisation et
c1) en cas de nouvelle occupation pendant l'intervalle de temps Δt, connecte la liaison mise en attente de la ligne en attente vers la ligne d'initialisation
ou
c2) rompt la liaison de la ligne en attente vers la ligne d'initialisation si aucune nouvelle occupation n'est identifiée pendant l'intervalle de temps Δt.

2. Procédé selon la revendication 1, **caractérisé en ce que**
le noeud de réseau rappelle la ligne d'initialisation si aucune nouvelle occupation n'est identifiée sur la ligne d'initialisation pendant l'intervalle de temps Δt, la liaison étant alors connectée en cas de nouvelle occupation consécutive de la ligne d'initialisation à l'intérieur d'un intervalle de temps Δt' ou rompue dans le cas contraire, si aucune réaction ne provient de la ligne d'initialisation.

3. Procédé selon l'une des revendications 1 ou 2, **caractérisé en ce que**
la mise en attente et la connexion de la liaison peuvent se répéter successivement sans limite.

4. Procédé selon l'une des revendications précédentes, **caractérisé en ce que**
le signal de commande qui déclenche la mise en attente est généré par l'entrée de hook flash (HF) et d'un ou plusieurs indicateurs de commande.

5. Procédé selon l'une des revendications précédentes, **caractérisé en ce que**,
pour rétablir la liaison à partir de la ligne d'initialisation, il est nécessaire, en plus de la nouvelle occupation, d'entrer une procédure de désactivation, telle que hook flash (HF) et un ou plusieurs indicateurs de commande.

6. Procédé selon l'une des revendications précédentes, **caractérisé en ce que**
le noeud de réseau transmet à la ligne en attente, pendant la mise en attente, une annonce et/ou de la musique.
